# EUROPEAN PATENT APPLICATION

(11) **EP 3 062 414 A1**
(43) Date of publication of application: **31.08.2016**
(21) Application number: 14855340.7
(22) Date of filing: 01.10.2014
(51) Int. Cl.: H02J 7/00, B60L 11/18

(54) **CHARGER, CHARGING SYSTEM, AND CHARGING METHOD**

(30) Priority: 25.10.2013 JP 2013222122
(71) Applicant: NEC Corporation, Tokyo 108-8001 (JP)
(72) Inventor: KONDO, Yasuaki, Tokyo 108-8001 (JP); CHIHARA, Shinpei, Tokyo 108-8001 (JP)
(74) Representative: Betten & Resch
(86) International application number: PCT/JP2014/076262
(87) International publication number: WO 2015/060083

(57) **Abstract**

This charger is provided with: a power supply unit that charges a secondary battery; an acquisition unit that acquires individual identification information for identifying the secondary battery; a comparison unit that compares the individual identification information acquired when starting the charging of the secondary battery with individual identification information acquired at the termination time of a past charging cycle. The power supply unit terminates the charging of the secondary battery on the basis of the results of comparison.

## Description

### Technical Field

The present invention relates to a technology of carrying out charging of a secondary battery.

### Background Art

In recent years, a number of techniques have been proposed relating to EV chargers that perform charging of secondary batteries mounted in EVs (Electric Vehicles).

For example, Patent Document 1 discloses a technology in which a charging termination condition is set as a condition in which the charging current that is supplied to an EV becomes a predetermined low current value and this charging state continues for a predetermined minimum continuous time interval, and charging is terminated upon the realization of this charging termination condition.

### Literature of the Prior Art

### Patent Documents

Patent Document 1: Japanese Unexamined Patent Application Publication No. 2012-235653

### Summary of the Invention

### Problem to be Solved by the Invention

The time interval during which an EV charger charges secondary batteries equipped in EVs tends to become over-extended. As a result, in order for the users of a large number of EVs to use an EV charger, a use limitation must be placed on the users of the EVs.

However, in the technology described in Patent Document 1, there is no information within the charger for identifying EVs (secondary batteries that are equipped in EVs) that have used the charger, and the problem therefore arises that the same user will repeatedly use the charger.

It is accordingly an object of the present invention to provide a technology that can solve the problem described hereinabove and prevent the repeated use of a charger by the same secondary battery.

### Means for Solving the Problem

The charger of the present invention is provided with:
a power supply unit that carries out charging of a secondary battery;
an acquisition unit that acquires individual identification information that identifies the secondary battery; and
a comparison unit that compares the individual identification information acquired when starting charging of said secondary battery with individual identification information that was acquired when terminating past charging;
wherein the power supply unit terminates charging of the secondary battery based on the comparison results.

The charging system of the present invention includes:
a charger; and
a server;
wherein the charger is provided with:
   a power supply unit that carries out charging of the secondary battery;
   the server is provided with:
      an acquisition unit that acquires individual identification information that identifies the secondary battery; and
      a comparison unit that compares individual identification information that was acquired when starting charging of the secondary battery with individual identification information that was acquired when terminating past charging; and the power supply unit terminates charging of the secondary battery based on the comparison results.

The charging method of the present invention includes steps of:
comparing individual identification information that was acquired when starting charging of a secondary battery and that identifies the secondary battery with individual identification information that was acquired when terminating past charging; and
terminating charging of the secondary battery based on the comparison results.

### Effect of the Invention

According to the present invention, the effect is obtained that the repeated use of a charger by the same secondary battery can be prevented.

### Brief Description of the Drawings

FIG. 1 is a block diagram showing the configuration of the charging system of the first and third exemplary embodiments of the present invention.
FIG. 2 is a flow chart for describing the operation of the charger of the first exemplary embodiment of the present invention.
FIG. 3 is a block diagram showing the configuration of the charging system of the second exemplary embodiment of the present invention.
FIG. 4 is a flow chart for describing the operation of the charger of the second exemplary embodiment of the present invention.
FIG. 5 is a flow chart for describing the operation of the charger of the third exemplary embodiment of the present invention.
FIG. 6 is a block diagram showing the configuration of the charging system of the fourth and sixth exemplary embodiments of the present invention.
FIG. 7 is a flow chart for describing the operation of the charger of the fourth exemplary embodiment of the present invention.
FIG. 8 is a block diagram showing the configuration of the charging system of the fifth exemplary embodiment of the present invention.
FIG. 9 is a flow chart for describing the operation of the charger of the fifth exemplary embodiment of the present invention.
FIG. 10 is a flow chart for describing the operation of the charger of the sixth exemplary embodiment of the present invention.
FIG. 11 is a block diagram showing an outline of the configuration of the charger of the present invention.
FIG. 12 is a block diagram showing an outline of the configuration of the charging system of the present invention.

### Best Mode for Carrying Out the Invention

Exemplary embodiments of the present invention are next described with reference to the accompanying drawings.

### (1) First Exemplary Embodiment

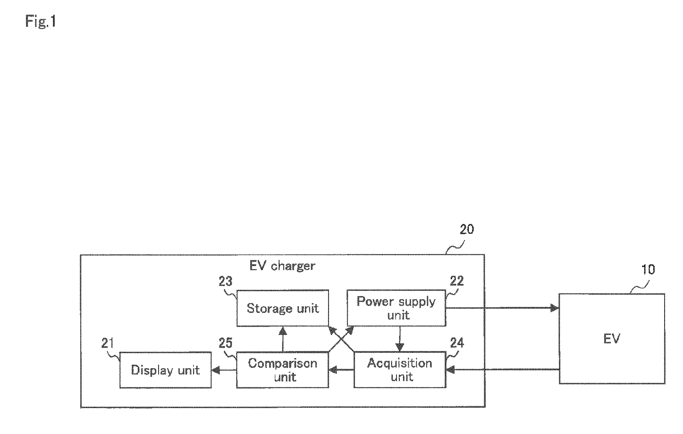

FIG. 1 shows the configuration of the charging system of the present exemplary embodiment.

As shown in FIG. 1, the charging system of the present exemplary embodiment includes: EV 10 and EV charger 20.

In the present exemplary embodiment, the charging method of EV 10 is assumed to be a charging method of the CHAdeMO standard. The CHAdeMO standard is a specification in which the control of the start and termination of charging is from the EV 10 side to EV charger 20.

EV charger 20 includes: display unit 21, power supply unit 22, storage unit 23, acquisition unit 24, and comparison unit 25.

Display unit 21 displays various screens.

Power supply unit 22 carries out charging of the secondary battery of EV 10.

Storage unit 23 stores various types of information.

Acquisition unit 24 acquires charging information of the secondary battery of EV 10. The charging information is one example of the individual identification information that identifies the secondary battery of EV 10, and is information that indicates the charge rate of the secondary battery of EV 10 at a point in time and a time stamp value.

Comparison unit 25 compares the charge rate that is indicated by the charging information at the start time of the current charging cycle with the charge rate that is indicated by charging information at the termination time of the previous charging cycle.

Power supply unit 22 terminates charging of the secondary battery of EV 10 based on the comparison results of comparison unit 25.

Although EV charger 20 is also provided with a settlement unit that, when EV charger 20 is operated and charges usage fees, settles the usage fees of EV charger 20, this settlement unit is omitted from the figures.

In addition, EV 10 is driven by electric power that is charged to the secondary battery by EV charger 20, but this drive system is also omitted from the figures.

The operation of EV charger 20 of the present exemplary embodiment is next described.

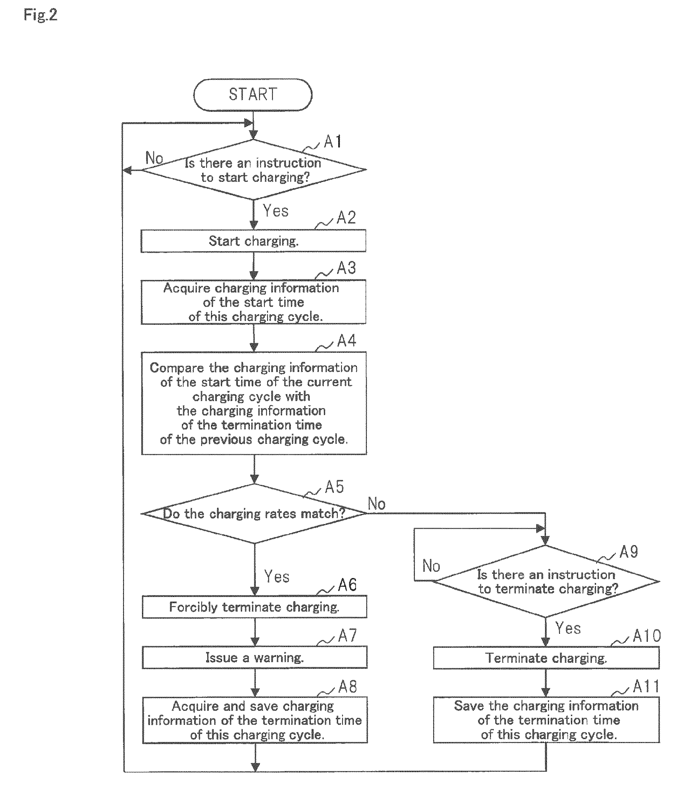

FIG. 2 shows a flow chart for describing the operation of EV charger 20 of the present exemplary embodiment.

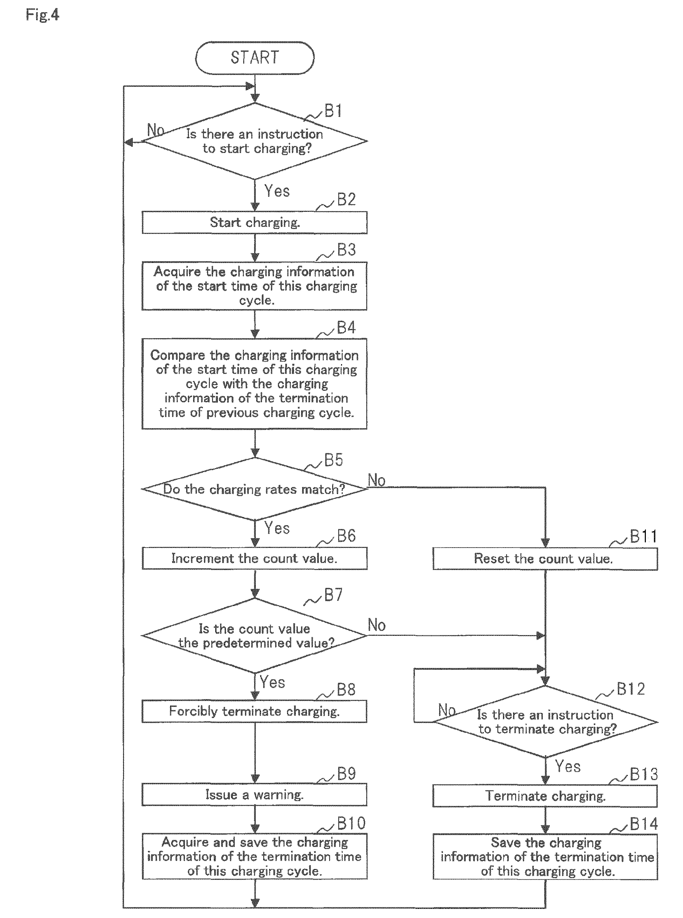

When carrying out charging of EV 10 of the CHAdeMO standard, the user first connects the charging connector of EV charger 20 to EV 10, following which EV charger 20 carries out an insulation test of the charging cable between the main unit of EV charger 20 and the charging connector and then carries out charging of EV 10 in accordance with an instruction from EV 10. In FIG. 2, the first step (Step A1 in FIG. 2) is assumed to be a step carried out after completion of the insulation test (the same holds true in the following FIGs. 4, 5, 7, 9, and 10).

As shown in FIG. 2, upon receiving an instruction from EV 10 to start charging ("Yes" in Step A1), power supply unit 22 starts the charging of EV 10 (Step A2).

In addition, acquisition unit 24 acquires charging information of the start time of this charging cycle from EV 10 (Step A3). In the CHAdeMO standard, the specifications stipulate that EV 10 both instruct the start and the termination of charging and transmit charging information.

At this time, as will be described hereinbelow, the charging information that was acquired from EV 10 at the time of termination of the previous charging cycle is saved in storage unit 23.

At this point, comparison unit 25 compares the charging rate indicated by the charging information at the start time of this instance of charging with the charging rate indicated by the charging information at the termination time of the previous charging cycle that was saved in storage unit 23 (Step A4) and judges whether the two charging rates match (Step A5). At this time, if the difference between the two charging rates is within a predetermined range, comparison unit 25 judges that the two charging rates match.

If comparison unit 25 judges in Step A5 that the charging rates match ("Yes" in Step A5), power supply unit 22 judges that the same EV 10 is repeatedly using EV charger 20 and forcibly terminates charging of EV 10 (Step A6).

In addition, display unit 21 displays a warning screen (Step A7). This warning screen is a screen that displays a message such as "Due to the possibility of repeated use, charging is forcibly terminated."

In addition, acquisition unit 24 acquires charging information of the termination time of this charging cycle from EV 10, the acquired charging information is saved in storage unit 23 (Step A8), following which the process returns to Step A1 and the succeeding processes are repeated.

On the other hand, if comparison unit 25 judges in Step A5 that the charging rates do not match ("No" in Step A5), a standby state subsequently takes effect until the arrival of an instruction from EV 10 to terminate charging. Upon receiving an instruction to terminate charging from EV 10 ("Yes" in Step A9), power supply unit 22 terminates charging to EV 10 (Step A10).

In addition, acquisition unit 24 acquires charging information of the termination time of this charging cycle from EV 10, the acquired charging information is saved in storage unit 23 (Step A11), following which the process returns to Step A1, and the succeeding processes are repeated.

In Steps A8 and A11, the charging information that precedes the termination of this charging cycle may be deleted or may be saved as is.

In the present exemplary embodiment as described hereinabove, EV charger 20 compares the charging rate of the starting time of this charging cycle with the charging rate of the termination time of the previous charging cycle, and when the difference between the two charging rates is within a predetermined range, judges that the two charging rates match and forcibly terminates charging to EV 10.

In other words, when the charging rate of the starting time of this charging cycle matches the charging rate of the termination time of the previous charging cycle, EV charger 20 judges that, because there is a strong possibility that the same EV 10 that terminated the previous charging cycle is now attempting to again start charging, the same EV 10 is repeatedly using EV charger 20 and therefore EV charger 20 forcibly terminates charging of EV 10.

Accordingly, the effect is obtained that the repeated use of EV charger 20 by the same EV 10 can be prevented.

In addition, in the present exemplary embodiment, the charging rate of the start time of the current charging cycle is judged to match the charging rate of the termination time of the previous charging cycle, the two charging rates are judged to match, and the charging to EV 10 forcibly terminated not only when the two charging rates completely match, but also when the two charging rates are within a predetermined range.

Accordingly, the effect is obtained of enabling prevention of a form of repeated use in which the same EV 10 having a secondary battery whose previous charging cycle was terminated, travels around the area in which EV charger 20 is installed to reduce the charging rate and then again attempts to start charging.

In the present exemplary embodiment, EV charger 20 is of a configuration that always compares the charging rate of the start time of the current charging cycle with the charging rate of the termination time of a previous charging cycle.

However, when a long time interval (for example, 30 minutes to one hour) has passed from the termination time of a previous charging cycle until the charging start time, it should be considered that there is a strong possibility that another EV 10 has started charging.

In response, EV charger 20 may carry out the comparison process of Step A4 only when the previous charging cycle terminated within a predetermined time range (for example, 30 minutes to one hour) before the charging start time, and in other cases, may omit the comparison process of Step A4 and advance to the process of Step A9.

However, until the stage is reached in which electricity is actually flowing, it is difficult to judge whether the electrical connection between the secondary battery of EV 10 and the EV charger 20 side will actually allow charging. As a result, when the settlement of usage fees is carried out before the start of charging, there is concern that a refund of payment will occur.

However, the occurrence of refunding usage fees can be prevented by using a system in which the settlement unit (not shown) settles usage fees after it has been confirmed that charging from power supply unit 22 of EV charger 20 to EV 10 has started.

The above-described system forcibly halts the charging to EV 10 from power supply unit 22 of EV charger 20 when settlement of usage fees has not been carried out after the passage of a fixed time interval from the confirmation of the start of charging. As a result, the occurrence of nonpayment of usage fees can also be prevented.

However, even when settlement of usage fees is not carried out, charging of the secondary battery of EV 10 can be carried out during the interval from confirming the start of charging until the passage of the fixed time interval. The amount that can be charged from confirming the start of charging until the passage of the fixed time is not great compared to an entire charging amount, but repeated charging during the above-described fixed time interval for which usage fees are not settled can increase the charging amount.

In other words, there is concern regarding the potential illicit use of EV charger 20 in which charging is carried out repeatedly from the confirmation of a charging start until the fixed time interval without settling the usage fees of EV charger 20.

When the charging rate of the start time of the current charging cycle matches the charging rate of the termination time of the previous charging cycle, EV charger 20 in the present exemplary embodiment determines that there is a high possibility that the same EV 10 having a secondary battery whose previous charging cycle was terminated is now attempting to have its secondary battery charged again. As a result, EV charger 20 is able to judge that the same EV 10 is repeatedly using EV charger 20 and then will forcibly terminate the charging to EV 10.

As described hereinabove, the application of the present invention enables the identification of EV 10 (user) that repeats charging from the confirmation of the start of charging until the passage of the fixed time interval without settling the usage fees of EV charger 20 and thus that is illicity using EV charger 20. In other words, the illicit act of the user of EV 10 of repeatedly having his vehicle's battery charged for the fixed time interval without settling usage fees can be prevented.

### (2) Second Exemplary Embodiment

In the first exemplary embodiment, EV charger 20 immediately judged that the same EV 10 was repeatedly using EV charger 20 when the charging rate of the start time of the current charging cycle matched the charging rate of the termination time of a previous charging cycle.

However, the possibility exists that the charging rates of different EVs 10 may match by coincidence, and in such cases, the use of EV charger 20 by a different EV 10 may be judged as repeated use.

In response to this possibility, EV charger 20 in the present exemplary embodiment judges that the same EV 10 is repeatedly using EV charger 20 when the matching of the charging rates continues for a predetermined number of times (for example, 2-3 times).

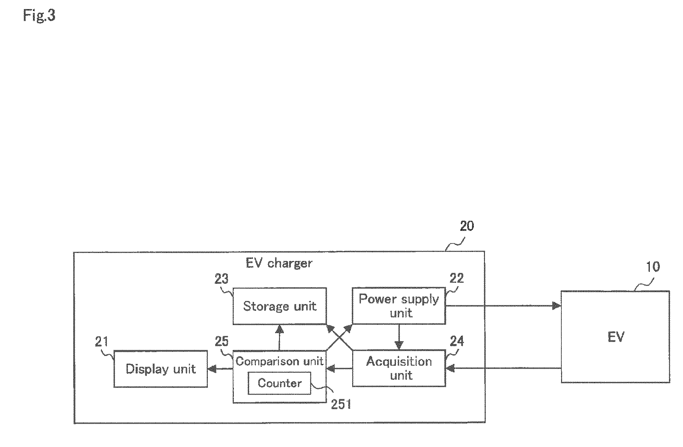

FIG. 3 shows the configuration of the charging system of the present exemplary embodiment.

As shown in FIG. 3, the charging system of the present exemplary embodiment differs from the configuration of the first exemplary embodiment of FIG. 1 in that comparison unit 25 is provided with counter 251 that is the first counter.

The operation of EV charger 20 of the present exemplary embodiment is next described.

FIG. 4 shows a flow chart for describing the operation of EV charger 20 of the present exemplary embodiment.

As shown in FIG. 4, the processes of Steps B1-B4 that are similar to Steps A1-A4 of the first exemplary embodiment of FIG. 2 are first carried out.

Next, comparison unit 25 judges whether the charging rate indicated by the charging information of the termination time of a previous charging cycle matches with the charging rate indicated by the charging information of the start time of the current charging cycle (Step B5). If the difference between the two charging rates is within a predetermined range at this time, comparison unit 25 judges that the two charging rates match, as in Step A5 of the first exemplary embodiment.

Upon judging in Step B5 that the charging rates match ("Yes" in Step B5), comparison unit 25 increments the count value of counter 251 by "1" (Step B6) and then judges whether the count value has reached a predetermined value (for example, 2 or 3) (Step B7).

In Step B7, if comparison unit 25 judges that the count value has reached the predetermined value ("Yes" in Step B7), power supply unit 22 judges that the same EV 10 is repeatedly using EV charger 20. The processes of Steps B8-B10 that are similar to Steps A6-A8 of the first exemplary embodiment are then carried out. Alternatively, if comparison unit 25 judges in Step B7 that the count value has not yet reached the predetermined value ("No" in Step B7), the procedure advances to the process of Step B12.

On the other hand, if comparison unit 25 judges in Step B5 that the charging rates do not match ("No" in Step B5), the count value of counter 251 is reset and returns to "0" (Step B11) and the procedure advances to the process of Step B12. Subsequently, the processes of Steps B12-B14 that are similar to Steps A9-A11 of the first exemplary embodiment are carried out.

In the present exemplary embodiment as described hereinabove, EV charger 20 compares the charging rate of the start time of the current charging cycle with the charging rate of the termination time of a previous charging cycle, increments the count value of counter 251 when the two charging rates match, resets the count value when the two charging rates do not match, and forcibly terminates the charging to EV 10 when the count value reaches a predetermined value.

In other words, EV charger 20 judges that the same EV 10 is repeatedly using EV charger 20 when matching of charging rates continues for a predetermined number of times and then forcibly terminates the charging to EV 10.

Accordingly, the effect is obtained of enabling prevention of an incorrect judgment that, due to the coincidental matching of the charging rates of different EVs 10, the use of EV charger 20 by a different EV 10 is judged as repeated use.

The other effects are the same as for the first exemplary embodiment.

### (3) Third Exemplary Embodiment

In the first exemplary embodiment, EV charger 20 judged that the same EV 10 is repeatedly using EV charger 20 if the charging rate of the start time of the current charging cycle matches the charging rate of the termination time of a previous charging cycle.

However, when the same user successively carries out charging of a plurality of EVs 10, detecting that the same user is repeatedly using EV charger 20 in a plurality of EVs 10 is not possible by merely comparing the charging rate of the start time of the current charging cycle with the charging rate of the termination time of a previous charging cycle.

In response, EV charger 20 in the present exemplary embodiment compares the charging rate of the start time of the current charging cycle with each of the charging rates of the termination times of a predetermined number (for example 2-3) of the most recent charging cycles, and, if any of the charging rates match, judges that the same user is repeatedly using EV charger 20 in a plurality of EVs 10.

The configuration itself in the present exemplary embodiment is similar to that of the first exemplary embodiment of FIG. 1.

The operation of EV charger 20 of the present exemplary embodiment is next described.

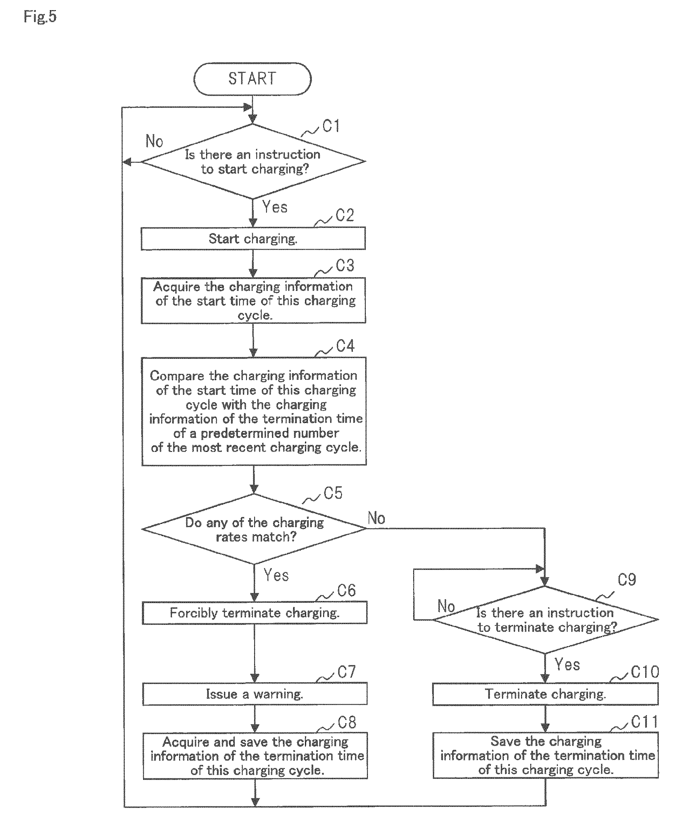

FIG. 5 is a flow chart for describing the operation of EV charger 20 of the present exemplary embodiment.

As shown in FIG. 5, the processes of Steps C1-C3 that are similar to Steps A1-A3 of FIG. 2 of the first exemplary embodiment are first carried out.

At this time, in contrast to the first exemplary embodiment, of the charging cycles that have been terminated in this EV charger 20 before the start time of the current charging cycle, charging information of the termination times of a predetermined number (for example, 2-3) of the most recent charging cycles are saved in storage unit 23.

Here, comparison unit 25 compares the charging rate that is indicated by charging information of the start time of the current charging cycle with each of the charging rates indicated by the charging information of the termination times of a predetermined number (for example 2-3) of the most recent charging cycles that are stored in storage unit 23 (Step C4) and judges whether any of the charging rates match (Step C5). At this time, it is assumed that, similar to Step A5 of the first exemplary embodiment, comparison unit 25 judges that the two charging rates match if the difference between the two charging rates is within a predetermined range.

If comparison unit 25 judges in Step C5 that any of the charging rates match ("Yes" in Step C5), power supply unit 22 judges that the same user is repeatedly using EV charger 20 in a plurality of EVs 10. Subsequently, the processes of Steps C6-C8 that are similar to Steps A6-A8 of the first exemplary embodiment are carried out.

On the other hand, if comparison unit 25 judges that none of the charging rates match ("No" in Step C5), the processes of Steps C9-C11 that are similar to Steps A9-A11 of the first exemplary embodiment are carried out.

In Steps C8 and C11, the charging information that precedes the termination times of a predetermined number of the most recent charging cycles including the termination time of the current charging cycle may be deleted or may be saved as is.

In the present exemplary embodiment as described hereinabove, EV charger 20 compares the charging rate of the start time of the current charging cycle with each of the charging rates of the termination times of a predetermined number of the most recent charging cycles and forcibly terminates charging to EV 10 if any of the charging rates match.

In other words, if the charging rate of the start time of the current charging cycle matches any of the charging rates of the termination times of a predetermined number of the most recent charging cycles, EV charger 20 judges that the same user is repeatedly using EV charger 20 in a plurality of EVs 10 and forcibly terminates charging to EV 10.

Accordingly, the effect is obtained of enabling detection that the same user is repeatedly using EV charger 20 in a plurality of EVs 10.

The other effects are similar to the effects of the first exemplary embodiment.

### (4) Fourth Exemplary Embodiment

The present exemplary embodiment is equivalent to the application of EV charger 20 of the first exemplary embodiment to a charging system in which a plurality of EV chargers 20 are installed within a predetermined area.

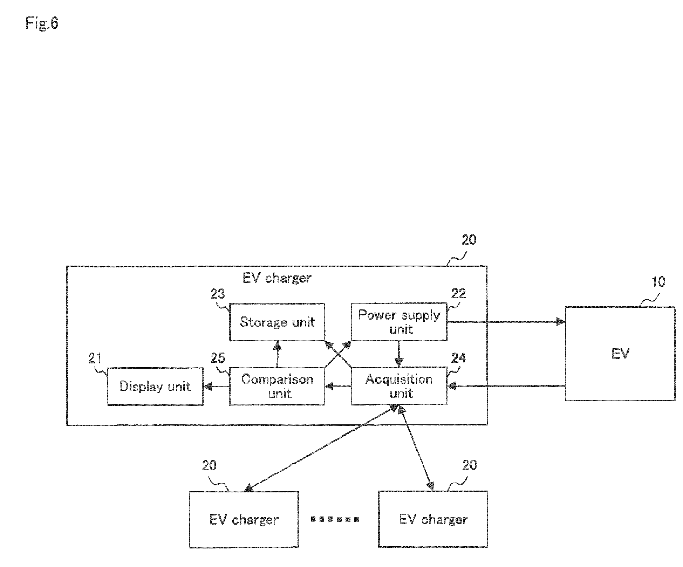

FIG. 6 shows the configuration of the charging system of the present exemplary embodiment.

As shown in FIG. 6, the charging system of the present exemplary embodiment differs from the configuration of the first exemplary embodiment of FIG. 1 in that a plurality of EV chargers 20 are installed in a predetermined area and the plurality of EV chargers 20 are configured to allow communication with each other.

The operation of the EV chargers 20 of the present exemplary embodiment is next described.

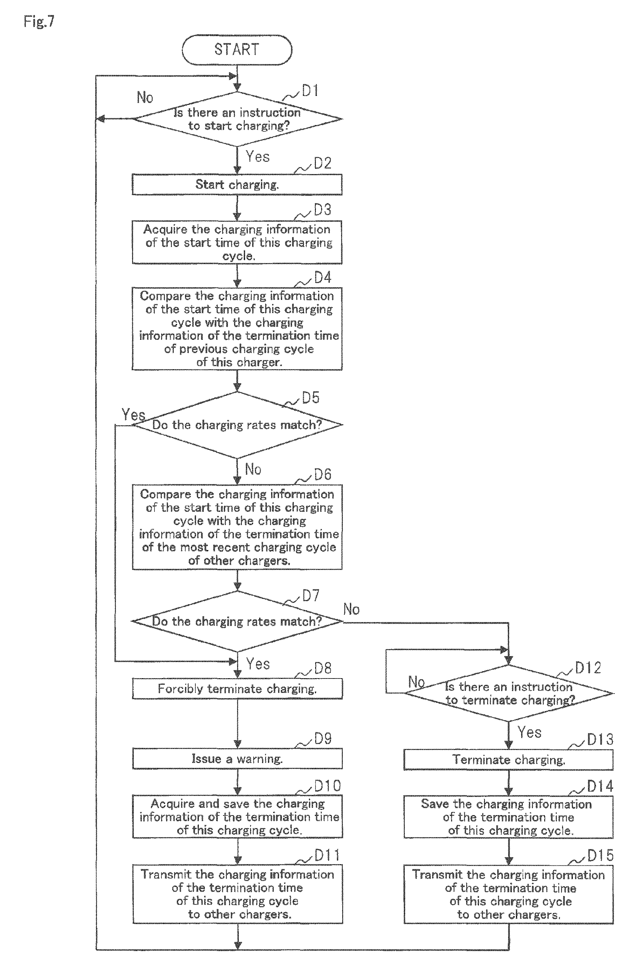

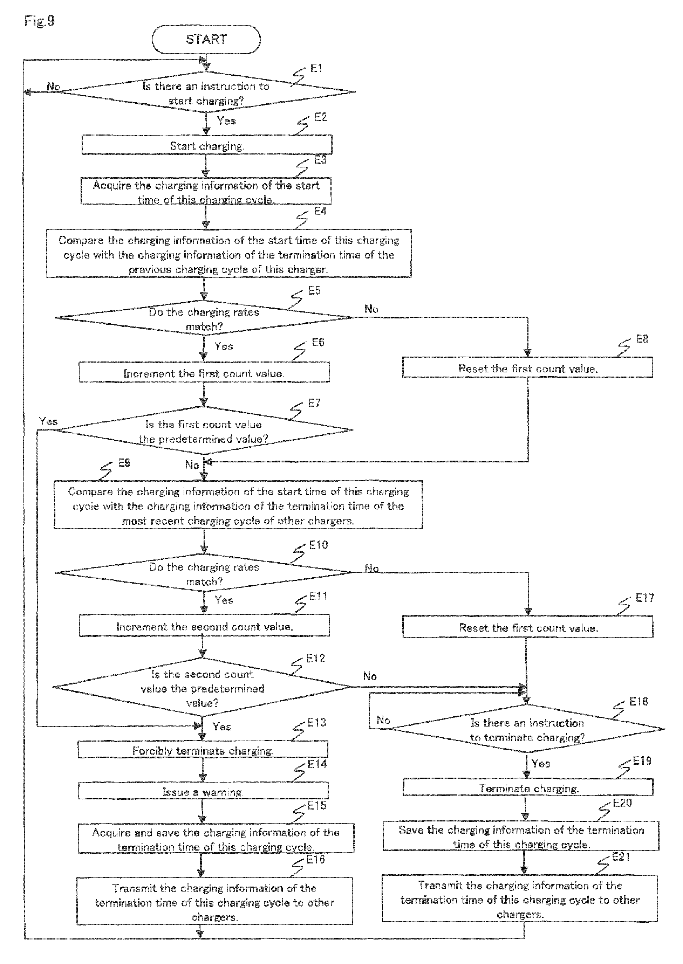

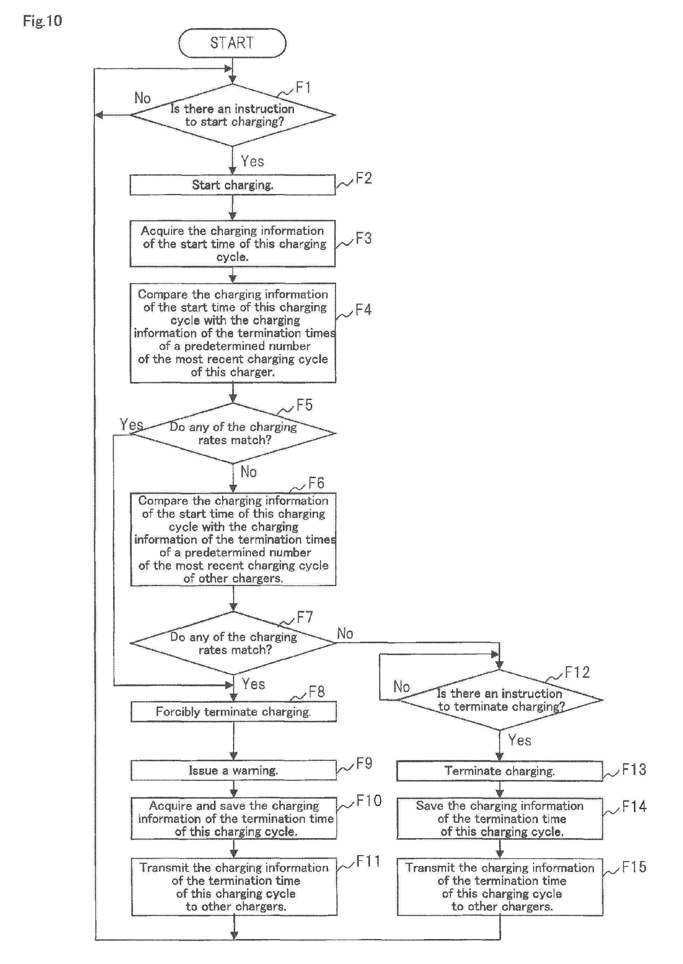

FIG. 7 shows a flow chart for describing the operation of the EV chargers 20 of the present exemplary embodiment. In FIG. 7, in the interest of simplifying the explanation, the explanation assumes that only one EV charger 20 other than a particular EV charger 20 is installed within a predetermined area (in other words, only two EV chargers 20 are installed within the predetermined area) (the same holds true for the following FIGs. 9 and 10).

As shown in FIG. 7, upon receiving an instruction from EV 10 to start charging ("Yes" in Step D1), power supply unit 22 starts charging EV 10 (Step D2).

In addition, acquisition unit 24 acquires the charging information of the start time of this charging cycle from EV 10 (Step D3).

At this time, as will be described hereinbelow, both charging information that was acquired from EV 10 at the termination time of the previous charging cycle of this EV charger 20 and charging information that was acquired from the other EV charger 20 at the termination time of the most recent charging cycle that was terminated in the other EV charger 20 before the start time of the current charging cycle are saved in storage unit 23

Here, comparison unit 25 compares the charging rate indicated by the charging information of the start time of the current charging cycle with the charging rate indicated by the charging information of the termination time of the previous charging cycle in its own EV charger 20 that is saved in storage unit 23 (Step D4), and judges whether the two charging rates match (Step D5). If the difference between the two charging rates is within a predetermined range at this time, comparison unit 25 judges that the two charging rates match.

In Step D5, if comparison unit 25 judges that the charging rates do not match ("No" in Step D5), comparison unit 25 compares the charging rate indicated by the charging information of the start time of the current charging cycle with the charging rate indicated by the charging information of the termination time of the most recent charging cycle of the other EV charger 20 that was saved in storage unit 23 (Step D6) and judges whether the two charging rates match (Step D7). As described hereinabove, if the difference between the two charging rates is within a predetermined range at this time, comparison unit 25 judges that the two charging rates match.

If comparison unit 25 judges in either of Step D5 or D7 that the charging rates match ("Yes" in Step D5 or "Yes" in Step D7), power supply unit 22 determines that the same EV 10 is repeatedly using the plurality of EV chargers 20 and forcibly terminates the charging to EV 10 (Step D8).

In addition, display unit 21 displays a warning screen (Step D9). This warning screen is, for example, a screen that displays the message "Due to the possibility of repeated use, charging is forcibly terminated."

Further, acquisition unit 24 acquires the charging information of the termination time of the current charging cycle from EV 10 and saves the acquired charging information in storage unit 23 (Step D10).

In addition, acquisition unit 24 transmits to the other EV charger 20 the charging information of the termination time of the current charging cycle together with the identifier of its own EV charger 20 (Step D11). This charging information is saved in storage unit 23 of the other EV charger 20 in association with the identifier of EV charger 20.

The procedure subsequently returns to the process of Step D1 and the succeeding processes are repeated.

On the other hand, if comparison unit 25 judges in Step D7 that the charging rates do not match ("No" in Step D7), a standby state subsequently takes effect until the arrival of an instruction from EV 10 to terminate charging. Upon receiving an instruction from EV 10 to terminate charging ("Yes" in Step D12), power supply unit 22 terminates charging to EV 10 (Step D13).

In addition, acquisition unit 24 acquires charging information of the termination time of the current charging cycle from EV 10 and saves the acquired charging information in storage unit 23 (Step D14).

Acquisition unit 24 further transmits to the other EV charger 20 the charging information of the termination time of the current charging cycle together with the identifier of its own EV charger 20 (Step D15). This charging information is saved in storage unit 23 of the other EV charger 20 in association with the identifier of EV charger 20.

The procedure then returns to the process of Step D1 and the succeeding processes are repeated.

In Steps D10 and D14, charging information that precedes the termination time of the current charging cycle of this EV charger 20 may be deleted or may be saved as is.

Further, charging information that precedes the termination time of the most recent charging cycle of the other EV charger 20 may be deleted or may be saved as is.

In FIG. 7, the explanation assumes that only one other EV charger 20 other than this EV charger 20 is installed, but in some cases, two or more other EV chargers 20 may also be installed. In such cases, the processes of Steps D6 and D7 are executed for each of the other EV chargers 20, and if the charging rates match for any of the other EV chargers 20 in Step D7, the procedure should proceed to Step D8 and otherwise should proceed to Step D12.

In the present exemplary embodiment as described hereinabove, each of the plurality of EV chargers 20 that have been installed within a predetermined area shares the charging information, and as a result, the effect is obtained that, even when the same EV 10 repeatedly uses the plurality of EV chargers 20 that are installed within the predetermined area, this repeated use can be detected.

The other effects are similar to the effects of the first exemplary embodiment.

In the present exemplary embodiment, EV charger 20 is of a configuration that always compares the charging rate of the start time of the current charging cycle with the charging rate of the termination time of the previous charging cycle of its own EV charger 20 and the charging rates of the termination times of the most recent charging cycles of other EV chargers 20.

However, when at the charging start time a long time interval (for example, 30 minutes to one hour) has elapsed from the previous charging termination time, the possibility that another EV 10 has started charging is considered to be high.

In response, EV charger 20 may carry out the comparison process of Step D4 only when the previous charging cycle of its own EV charger 20 terminated within a predetermined time range (for example, 30 minutes to one hour) before the charging start time, and otherwise may omit the comparison process of Step D4 and advance to the process of Step D6.

Alternatively, EV charger 20 may carry out the comparison process of Step D6 only when the most recent charging of another EV charger 20 was terminated within a predetermined time range (for example, 30 minutes to one hour) before the charging start time, and otherwise, may omit the comparison process of Step D6 and proceed to the process of Step D12.

### (5) Fifth Exemplary Embodiment

The present exemplary embodiment is equivalent to the application of EV charger 20 of the second exemplary embodiment to a charging system in which a plurality of EV chargers 20 are installed within a predetermined area.

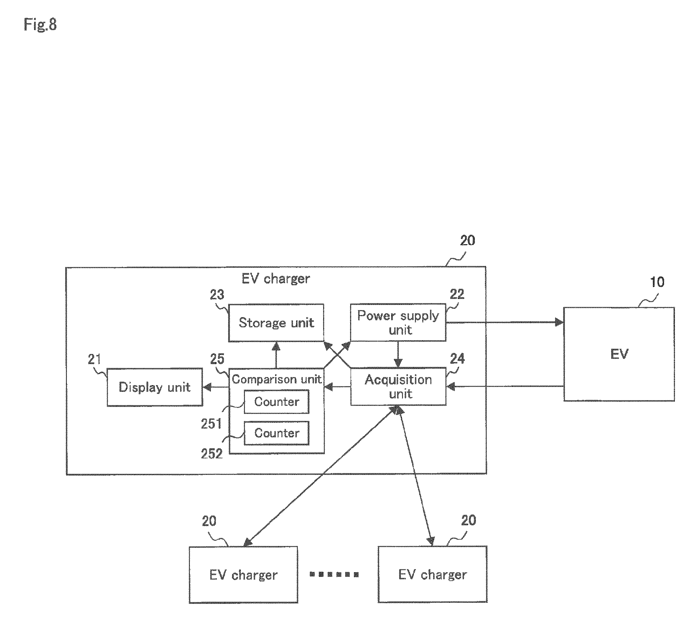

FIG. 8 shows the configuration of the charging system of the present exemplary embodiment.

As shown in FIG. 8, the charging system of the present exemplary embodiment differs from the configuration of the fourth exemplary embodiment of FIG. 6 in that counter 251 that is the first counter and counter 252 that is the second counter are provided.

The operation of EV chargers 20 of the present exemplary embodiment is next described.

FIG. 9 is a flow chart for describing the operation of EV chargers 20 of the present exemplary embodiment.

As shown in FIG. 9, the processes of Steps E1-E4 that are similar to Steps D1-D4 of the fourth exemplary embodiment of FIG. 7 are first carried out.

Comparison unit 25 next judges whether the charging rate indicated by the charging information of the termination time of the previous charging cycle of its own EV charger 20 matches with charging rate indicated by the charging information of the start time of the current charging cycle (Step E5). As in Step D5 of the fourth exemplary embodiment, if the difference between the two charging rates is within a predetermined range at this time, comparison unit 25 judges that the two charging rates match.

If comparison unit 25 judges in Step E5 that the charging rates do not match ("No" in Step E5), the count value of counter 251 is reset and thus returned to "0" (Step E8) and the procedure advances to Step E9.

On the other hand, if comparison unit 25 judges in Step E5 that the charging rates match ("Yes" in Step E5), the count value of counter 251 is incremented by "1" (Step E6), and comparison unit 25 judges whether the count value has reached a predetermined value (for example, 2 or 3) (Step E7).

If comparison unit 25 judges in Step E7 that the count value has not reached the predetermined value ("No" in Step E7), comparison unit 25 compares the charging rate indicated by the charging information of the start time of the current charging cycle with the charging rate indicated by the charging information of the termination time of the most recent charging cycle of the other EV charger 20 that was saved in storage unit 23 (Step E6) and judges whether the two charging rates match (Step E10). As described above, if the difference between the two charging rates is within a predetermined range, comparison unit 25 determines that the two charging rates match.

If comparison unit 25 judges in Step E10 that the charging rates do not match ("No" in Step E10), comparison unit 25 resets the count value of counter 252, returning the count value to "0" (Step E17) and the proceeds to the process of Step E18.

On the other hand, if comparison unit 25 judges in Step E10 that the charging rates match ("Yes" in Step E10), comparison unit 25 increments the count value of counter 252 by "1" (Step E11) and judges whether the count value has reached a predetermined value (for example, 2 or 3) (Step E12).

If comparison unit 25 judges in either Step E7 or Step E12 that the count value has reached the predetermined value ("Yes" in Step E7 or "Yes" in Step E12), power supply unit 22 determines that the same EV 10 is repeatedly using the plurality of EV chargers 20. The processes of Steps E13-E16 that are similar to the Steps D 8-D11 of the fourth exemplary embodiment are subsequently carried out. If comparison unit 25 judges in Step E 12 that the count value has not reached the predetermined value ("No" in Step E12), the procedure advances to the process of Step E18. The processes of Steps E18-E21 that are similar to Steps D12-D15 of the fourth exemplary embodiment are subsequently carried out.

Although FIG. 9 was described on the assumption that only one EV charger 20 other than its own EV charger 20 is installed, there are also cases in which two or more other EV chargers 20 are installed. In such cases, the processes of Steps E9-E12 and E17 are executed for each of the other EV chargers 20, and when any of the charging rates of the other EV chargers 20 match in Step E12, the process should advance to Step E13 and otherwise should advance to Step E18.

In the present exemplary embodiment as described hereinabove, because each of the plurality of EV chargers 20 that are installed in a predetermined area shares the charging information, the effect is obtained that even when the same EV 10 repeatedly uses the plurality of EV chargers 20 that are installed in the predetermined area, this repeated use can be detected

The other effects are similar to those of the second exemplary embodiment.

### (6) Sixth Exemplary Embodiment

The present exemplary embodiment is equivalent to the application of EV charger 20 of the third exemplary embodiment to a charging system in which a plurality of EV chargers 20 are installed within a predetermined area.

The configuration itself of the present exemplary embodiment is similar to that of the fourth exemplary embodiment of FIG. 6.

The operation of the EV chargers 20 of the present exemplary embodiment is next described.

FIG. 10 shows a flow chart for describing the operation of the EV chargers 20 of the present exemplary embodiment.

As shown in FIG. 10, the processes of Steps F1-F3 that are similar to Steps D1-D3 of the fourth exemplary embodiment of FIG. 7 are first carried out.

At this time, in contrast with the fourth exemplary embodiment, the charging information of the termination times of a predetermined number (for example, 2 or 3) of the most recent charging cycles among charging cycles that were terminated by this EV charger 20 before the start time of the current charging cycle is stored in storage unit 23 together with the charging information of the termination times of a predetermined number (for example, 2 or 3) of the most recent charging cycles among charging cycles that were terminated by the other EV charger 20 before the start time of the current charging cycle.

Comparison unit 25 compares the charging rate indicated by the charging information of the start time of the current charging cycle with each of the charging rates indicated by the charging information of the termination times of a predetermined number (for example, 2-3) of the most recent charging cycles of its own EV charger 20 that were saved in storage unit 23 (Step F4) and determines whether any of the charging rates match (Step F5). As in Step D5 of the fourth exemplary embodiment, if the difference between two charging rates is within a predetermined range at this time, comparison unit 25 judges that the two charging rates match.

If comparison unit 25 judges in Step F5 that none of the charging rates match ("No" in Step F5), comparison unit 25 compares the charging rate indicated by the charging information of the start time of the current charging cycle with each of the charging rates that are indicated by the charging information of the termination times of a predetermined number (for example, 2-3) of the most recent charging cycles of the other EV charger 20 that were saved in storage unit 23 (Step F6) and determines whether any of the charging rates match (Step F7). As described hereinabove, if the difference between two charging rates is within a predetermined range at this time, comparison unit 25 judges that the two charging rates match.

If comparison unit 25 judges in Step F5 or F7 that any of the charging rates match ("Yes" in Step F5 or "Yes" in Step F7), power supply unit 22 determines that the same user is repeatedly using a plurality of EV chargers 20 in a plurality of EVs 10. Subsequently, the processes of Steps F8-F11 that are similar to Steps D8-D11 of the fourth exemplary embodiments are carried out.

On the other hand, if comparison unit 25 judges in Step F7 that none of the charging rates match ("No" in Step F7), the processes of Steps F12-F15 similar to Steps D12-D15 of the fourth exemplary embodiment are subsequently carried out.

In Steps F10 and F14, charging information that precedes the termination times of a predetermined number of the most recent charging cycles that includes the termination time of the current charging cycle may be deleted or saved as is.

In addition, charging information that precedes the termination times of a predetermined number of the most recent charging cycles of the other EV charger 20 may be deleted or stored as is.

Although this description assumes that only one other EV charger 20 in addition to this EV charger 20 is installed in FIG. 10, in some cases, two or more other EV chargers 20 are installed. In such cases, the processes of Steps F6 and F7 may be executed for each of the other EV chargers 20, the process advancing to Step F8 if the charging rates of any of the other EV chargers 20 match in Step F7 and otherwise advancing to Step F12.

Because each of the plurality of EV chargers 20 installed within a predetermined area shares charging information in the present exemplary embodiment as described hereinabove, the effect is obtained that repeated use can be detected even in a case in which the same user repeatedly uses a plurality of EV chargers 20 that are installed within the predetermined area in a plurality of EVs 10.

The other effects are similar to the effects of the third exemplary embodiment.

Although the present invention has been described with reference to exemplary embodiments, the present invention is not limited to the above-described exemplary embodiments. The configuration and details of the present invention are open to various modifications within the scope of the present invention that will be clear to one of ordinary skill in the art.

In the first to sixth exemplary embodiments, example were presented in which charging information that is transmitted from EVs 10 by way of the charging cable was used as the individual identification information of the secondary batteries of EVs 10, but the present invention is not limited to this form. For example, the individual identification information of the secondary batteries of EVs 10 may be, of the information transmitted from EVs 10 by way of the charging cable, information that enables identification of the secondary batteries of EVs 10 in addition to information of the charging rates. In addition, the method of transmitting individual identification information from EVs 10 to EV chargers 20 may be a method (for example, wireless communication) other than a method that passes by way of a charging cable.

Further, in the first, third, fourth, and sixth exemplary embodiments, the individual identification information of the secondary batteries of EVs 10 may be information of the license plate numbers of EVs 10. In this case, acquisition unit 24 may employ a reading unit (not shown) that reads the license plate numbers from the license plates of EVs 10.

In addition, in the first to third exemplary embodiments, the individual identification information (charging information) is stored by EV chargers 20, but the present invention is not limited to this form, and a configuration may be adopted in which the individual identification information is stored in a server (for example a server on the Internet) provided outside EV chargers 20.

Further, in the fourth to sixth exemplary embodiments, the individual identification information (charging information) was stored by each of a plurality of EV chargers 20, but the present invention is not limited to this form, and a configuration may be adopted in which the individual identification information is saved in a specific EV charger 20 among the plurality of EV chargers 20, or a configuration may be adopted in which the individual identification information is stored by a server (for example, a server on the Internet) that is provided outside EV chargers 20.

In the fourth to sixth exemplary embodiments, a plurality of EV chargers 20 communicated directly with each other, but the present invention is not limited to this form, and may also be a form in which EV chargers 20 communicate with each other by way of a server provided outside EV chargers 20 (for example, a server on the Internet).

When EV chargers 20 judged that the same EV 10 was repeatedly using EV chargers 20 in the first to sixth exemplary embodiments, a warning screen was displayed on display unit 21 to notify the user, but a manager in a remote location that manages EV chargers 20 may also be notified. As the method of notifying the manager, a method such as transmitting email to the manager's terminal can be considered.

Still further, although the description in the first to sixth exemplary embodiments assumed that the charging method of EVs 10 was a charging method of the CHAdeMO standard, the present invention is not limited to this form and can also be applied to a charging method other than the CHAdeMO standard. In other words, in the CHAdeMO standard, EV charger 20 starts charging a secondary battery in accordance with an instruction from EV 10, but the present invention is not limited to this form, and charging a secondary battery of EV 10 may also be started by an instruction from EV charger 20.

Although the charger of the present invention was applied in EV chargers 20 that carry out charging of secondary batteries of EVs 10 in the first to sixth exemplary embodiments, the present invention is not limited to this form. The charger of the present invention can also be applied to a charger that carries out charging of the secondary battery of an electric vehicle (such as an EV, an electric motorcycle, or a power-assisted bicycle), a PC (Personal Computer), or a portable apparatus.

Although acquisition unit 24 and comparison unit 25 were provided inside EV chargers 20 in the first to sixth exemplary embodiments, acquisition unit 24 and comparison unit 25 may also be provided in a server (for example, a server on the Internet) that is provided outside EV chargers 20. In this case, the server that is provided outside EV charger 20 should communicate with and control a single EV charger 20 (claims 1-5) or a plurality of EV chargers 20 (claims 6-9).

In the first exemplary embodiment, explanation regarding the application of the present invention to a system in which usage fees are settled after confirmation that EV charger 20 has started to charge EV 10, and further, in which charging of EV 10 by EV charger 20 is forcibly halted when settlement of usage fees is not carried out during the passage of a fixed time interval after the confirmation of the start of charging. The other second to sixth exemplary embodiments may also allow applying this invention to this system.

In the fifth exemplary embodiment, an example was described in which each of a plurality of EV chargers 20 is provided with counter 252 that is the second counter, and each of the EV chargers 20 separately keep count. However, in this configuration, the possibility arises that the number of times that charging rates match cannot be appropriately counted.

In response, only one counter 252 may be provided in a server (for example, a server on the Internet) that is provided outside EV chargers 20.

In the case of this configuration, counting the count number of each EV charger 20 by the counter provided on the server enables the identification of a specific EV 10 that repeatedly uses a plurality of EV chargers 20.

Alternatively, counter 252 may be provided in each of a plurality of EV chargers 20, and each of the plurality of EV chargers 20 shares information relating to the count numbers.

In order to place EVs 10 and count numbers in correspondence, count numbers that correspond to charging rates (or license plates or vehicle identification information) are shared among each of the EV chargers.

For example, assuming three EV chargers A, B, and C, the distance between EV chargers A and B is 500 m, the distance between EV chargers B and C is also 500 m, and the distance between EV chargers A and C is 1 km. If a range of 500 m is set as the predetermined area, checking is carried out by one item of limit information (counter information) by EV chargers A and B, and checking is carried out by one item of limit information (counter information) by EV chargers B and C. In this case, because it is possible to belong to a plurality of areas as is the case for EV charger B, the limit check must be made from a perspective removed from the number of EV chargers. In this case, EV chargers A, B, and C may share counter information.

Finally, an outline of the present invention is described.

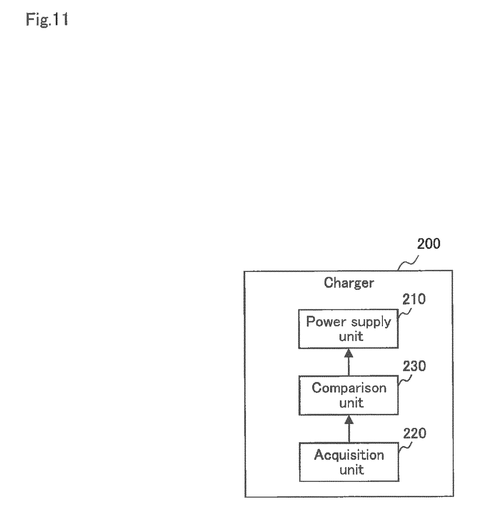

FIG. 11 shows an outline of charger 200 of the present invention.

As shown in FIG. 11, charger 200 of the present invention has power supply unit 210, acquisition unit 220, and comparison unit 230.

Power supply unit 210 carries out charging of secondary batteries.

A secondary battery for which power supply unit 210 carries out charging is a secondary battery of, for example, an electric vehicle, an electric motorcycle, a power-assisted bicycle, a PC, or a portable apparatus.

Acquisition unit 220 acquires individual identification information that identifies secondary batteries.

Comparison unit 230 compares individual identification information that was acquired at the start time of charging a secondary battery and individual identification information that was acquired at the termination time of past charging.

Here, the termination time of past charging refers to the time of terminating the previous charging cycle or to the termination times of a predetermined number of the most recent charging cycles.

Power supply unit 210 terminates charging of a secondary battery based on the comparison results of comparison unit 230.

As a result, charger 200 can forcibly terminate charging of a secondary battery when it determines on the basis of the comparison results of comparison unit 230 that the same secondary battery is repeatedly using charger 200.

As a result, the effect is obtained that the repeated use of charger 200 by the same secondary battery can be prevented.

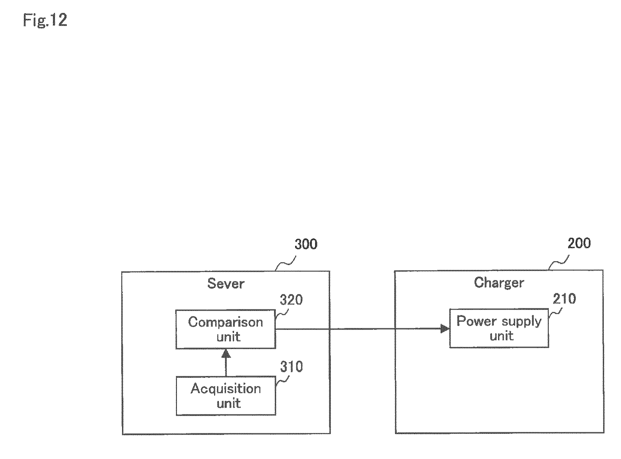

FIG. 12 shows an outline of the charging system of the present invention.

As shown in FIG. 12, the charging system of the present invention has charger 200 and server 300.

Charger 200 has power supply unit 210.

Power supply unit 210 carries out charging of a secondary battery.

The secondary battery for which power supply unit 210 performs charging is the secondary battery of, for example, an electric vehicle, an electric motorcycle, a power-assisted bicycle, a PC, or a portable apparatus.

Server 300 has acquisition unit 310 and comparison unit 320.

Acquisition unit 310 acquires individual identification information that identifies secondary batteries.

Comparison unit 320 compares individual identification information acquired at the start time of charging of a secondary battery with individual identification information acquired at the termination time of a past charging cycle.

Here, the termination time of a past charging cycle refers to the termination time of the previous charging cycle or the termination times of a predetermined number of the most recent charging cycles.

Power supply unit 210 terminates charging of a secondary battery on the basis of the comparison results of comparison unit 320.

As a result, charger 200 can forcibly terminate charging of a secondary battery when it determines based on the comparison results of comparison unit 320 that the same secondary battery is repeatedly using charger 200.

As a result, the effect is obtained that the repeated use of charger 200 by the same secondary battery can be prevented.

This application claims the benefits of priority based on Japanese Patent Application No. 2013-222122 for which application was submitted on October 25, 2013 and incorporates by citation all of the disclosures of that application.

## Claims

1. A charger comprising:
a power supply unit that carries out charging of a secondary battery;
an acquisition unit that acquires individual identification information that identifies said secondary battery; and
a comparison unit that compares individual identification information acquired when starting charging of said secondary battery with individual identification information that was acquired when terminating past charging;
wherein said power supply unit terminates charging of said secondary battery on the basis of said comparison results.

2. The charger as set forth in claim 1, wherein:
said comparison unit compares individual identification information that was acquired when starting charging of said secondary battery with individual identification information that was acquired when terminating last charging; and
said power supply unit terminates charging to said secondary battery when the individual identification information matches.

3. The charger as set forth in claim 2, wherein:
when previous charging terminated within a predetermined time range before starting charging of said secondary battery, said comparison unit compares individual identification information that was acquired when starting charging of said secondary battery with individual identification information that was acquired when terminating the last charging.

4. The charger as set forth in claim 1, wherein:
said comparison unit has a first counter; and increments the count value of said first counter when, upon comparing individual identification information that was acquired when starting charging of said secondary battery with individual identification information that was acquired when the previous charging was terminated and the two items of individual identification information match, and resets the count value of said first counter when the two items of individual identification information do not match; and
said power supply unit terminates charging of said secondary battery when the count value of said first counter reaches a predetermined value.

5. The charger as set forth in claim 1, wherein:
said comparison unit compares individual identification information that was acquired when starting charging of said secondary battery with individual identification information that was acquired when terminating a predetermined number of the most recent charging cycles; and
said power supply unit terminates charging of said secondary battery if any of said items of individual identification information match.

6. The charger as set forth in claim 2, wherein:
said charger is installed together with another charger within a predetermined area;
said comparison unit compares individual identification information that was acquired when starting charging of said secondary battery with individual identification information that was acquired upon termination of the most recent charging cycle that was terminated by said other charger before the start of this charging cycle; and
said power supply unit terminates charging of said secondary battery when the two items of individual identification information match.

7. The charger as set forth in claim 6, wherein:
said comparison unit, when a most recent charging cycle was terminated by said other charger within said predetermined time range before charging of said secondary battery is started, compares individual identification information that was acquired when starting charging of said secondary battery with individual identification information that was acquired when the most recent charging cycle was terminated by said other charger.

8. The charger as set forth in claim 4, wherein:
said charger is installed together with another charger within a predetermined area;
said comparison unit further has a second counter, compares individual identification information that was acquired when starting charging of said secondary battery with individual identification information that was acquired at the termination of the most recent charging cycle that was terminated by said other charger before the start of this charging cycle, increments the count value of said second counter when the two items of individual identification information match, and resets the count value of said second counter when the two items of individual identification information do not match; and
said power supply unit terminates charging of said secondary battery when the count value of said second counter reaches a predetermined value.

9. The charger as set forth in claim 5, wherein:
said charger is installed together with another charger within a predetermined area;
said comparison unit compares individual identification information that was acquired when starting charging of said secondary battery with individual identification information that was acquired at the termination of a predetermined number of the most recent charging cycles that were terminated by said other charger before the start of this charging cycle; and
said power supply unit terminates charging of said secondary battery when any of said individual identification information matches.

10. The charger as set forth in any one of claims 1 to 9, wherein said individual identification information is information transmitted from said secondary battery.

11. The charger as set forth in claim 10, wherein:
said individual identification information is charging information that indicates the charging rate of said secondary battery; and
said comparison unit determines a match between two items of charging rates when the difference between said charging rates of the objects of comparison are within a predetermined range.

12. The charger as set forth in any one of claims 1 to 3, 5 to 7, and 9, wherein:
said individual identification information is information of the license plate number of an electric vehicle that has said secondary battery; and
said comparison unit reads said license plate number from the license plate of said electric vehicle.

13. The charger as set forth in any one of claims 1 to 12, further comprising a settlement unit that settles usage fees of the charger after charging of said secondary battery has started.

14. The charger as set forth in claim 13, wherein:
said power supply unit terminates charging of said secondary battery if said settlement has not been carried out by said settlement unit within the passage of a fixed time interval after charging of said secondary battery started.

15. A charging system comprising:
a charger; and
a server;
wherein:
said charger is provided with a power supply unit that performs charging of a secondary battery;
said server is provided with:
an acquisition unit that acquires individual identification information that identifies said secondary battery; and
a comparison unit that compares individual identification information that was acquired when starting charging of said secondary battery with individual identification information that was acquired when terminating past charging; and
said power supply unit terminates charging of said secondary battery on the basis of said comparison results.

16. A charging method comprising steps of:
comparing individual identification information that is acquired when starting charging of a secondary battery and that identifies said secondary battery with individual identification information that was acquired when terminating past charging; and
terminating charging of said secondary battery on the basis of said comparison results.
